# EUROPEAN PATENT APPLICATION

(11) **EP 2 160 054 A1**
(43) Date of publication of application: **03.03.2010**
(21) Application number: 08105188.0
(22) Date of filing: 29.08.2008
(51) Int. Cl.: H04W 16/04

(54) **Method for assigning radio resources and radio resource controlling device**

(71) Applicant: Nokia Siemens Networks OY, 02610 Espoo (FI)
(72) Inventor: Höhne, Thomas, 00420, Helsinki (FI); Kuru, Lauri, 02270, Espoo (FI); Moilanen, Jani, 00200, Helsinki (FI)
(74) Representative: Bruglachner, Thomas E.

(57) **Abstract**

Method for assigning radio resources to multiple cells in a cellular radio communication system, said radio resources including time resources and/or frequency resources in data frames, said method including the steps of selecting a reuse scheme for a given data frame out of a plurality of reuse schemes determining the reuse of resources in different cells, and assigning the distribution of resources in a data frame based on the selected reuse scheme.
In order to enhance the flexibility of the method, it is proposed that the step of selecting the reuse scheme is performed such that the selected reuse scheme is kept the same throughout at least one entire data frame and another reuse scheme is selected for at least one subsequent frame.

## Description

### 1. Field of the Invention

The invention relates to a method for assigning radio resources to multiple cells in a cellular radio communication system including the selection of a reuse scheme for a given data frame out of a plurality of possible reuse schemes determining the reuse of resources in different cells of a cellular radio communication system. Moreover, the invention relates to a radio resource controlling device implementing a method of this type and to a user equipment device adapted for use in a cellular radio communication system employing the method according to the invention.

### 2. Background of the Invention

The document US 5,946,625 A relates to a method for assigning radio resources to multiple cells in the cellular radio communication system. The radio resources include time resources and frequency resources in data frames transmitted over the wireless links of the cellular network.

US 5,946,625 A proposes to select a reuse scheme for a given data frame out of a plurality of possible reuse schemes, wherein the reuse schemes determine the reuse of resources in different cells in such a way that interference between neighbouring cells is avoided. Once the reuse scheme is selected, the distribution of resources in the data frame over the different cells is performed based on the selected reuse scheme. The above mentioned document relates to a fractional loading scheme in which each cell is deliberately underloaded so as to operate at less than its full capacity. The underloading of the individual cells reduces the spectral efficiency within each cell in order to reduce the interference between different users. This reduction in cochannel interference allows the reuse distance between cochannel cells to be reduced, thereby increasing the reuse of frequencies throughout the system. This finally results in an increase in the overall spectral efficiency of the system as a whole.

Moreover, the document US 2007/0223606 A1 teaches to apply various reuse schemes in one zone of a data frame being designated for dynamic radio resource assignment. This functionality is provided in a static as well as dynamic manner. If the reuse parameters are dynamic, a separate signalling mechanism is needed to indicate the reuse parameters in a dynamic and efficient manner. However, the dynamicity is restricted to temporal changes of the reuse scheme within a data frame.

This type of adaptive control of reuse parameters entails an important signalling overhead.

### 3. Summary of the Invention

It is the object of the invention to provide a method for assigning radio resources in a cellular radio communication system enabling a dynamical selection out of a high number of possible distributions of resources while keeping the signalling overhead low.

The invention starts from a method for assigning radio resources to multiple cells in a cellular radio communication system. The radio resources include time resources and/or frequency resources in data frames. The method includes the steps of selecting a reuse scheme for a given data frame out of a plurality of possible reuse schemes and assigning the distribution of resources in a data frame over the cells based on this selective reuse scheme. The reuse scheme determines how the resources are reused in different cells. The reuse scheme may for example prescribe whether a particular frequency or time slot may be used in every cell, every third cell, or every seventh cell. The latter possibilities correspond to reuse factors 1, 3, and 7, respectively.

In order to enable a flexible choice of the reuse scheme while avoiding the signalling overhead, it is proposed that the step of selecting the reuse scheme is performed such that the selected reuse scheme is kept the same throughout at least one entire data frame and another reuse scheme is selected for at least one subsequent frame. Since the same reuse scheme is employed for the entire frame, the signalling efforts may be kept small. A function and/or parameter determining the selection of the reuse scheme e.g. depending on the frame number or depending on time may be distributed over the network once. Accordingly, the employed reuse scheme may be determined everywhere in the network without additional signalling. As a consequence, the invention enables a time-dependent choice of the reuse scheme while keeping the signalling overhead at a minimum value.

Moreover, it is proposed that the selection of the reuse scheme follows a predetermined schedule. This enables a further reduction of the signalling overhead.

According to a favourable embodiment of the invention, the method further comprises the step of selecting a temporal pattern to be used for selecting the reuse scheme for the subsequent frames. The temporal pattern may in particular be periodically repeated such that once the information defining the temporal pattern is transmitted, no further control information relating to the reuse scheme is needed.

Moreover, the plurality of reuse schemes may include at least one reuse scheme with reuse factor 1 and one reuse scheme with reuse factor 3. If the fraction of frames in which reuse factor 1 or reuse factor 3 is suitably chosen, a suitable trade-off between cell throughput at the cell edges may be found in any case.

The plurality of reuse schemes may include at least one frequency reuse scheme, in particular, a fractional frequency reuse scheme and/or a soft frequency reuse scheme, in particular a soft fractional frequency reuse scheme which is characterized in that the frequency is reused in neighbouring cells, but with a reduced transmission power.

The advantages of the invention are particularly apparent in the case where the step of assigning the distribution of resources relates to the assignment of uplink resources. In particular, in the case of time division duplex uplink (TDD UL) where the mobile station can usually not utilize very large bandwidth due to a limited link budget, the uplink frame allocation is usually very narrow in frequency and long in time.

If, as proposed in the prior art, a single frame is split into different reuse-zones, this further reduces the capacity that would be potentially available in one frame for one mobile station. Since the allocation usually must carry further overhead such as some header and/or checksum, the available payload capacity falls easily into a very small fraction of what originally seemed to be available.

From another viewpoint, the advantages of the invention can be seen in that the longer the fraction of a frame employing a particular reuse scheme is, the better is the coverage that the system can provide. If the frame length is divided into two parts, wherein one part employs the reuse factor 1 and the other part employs the reuse factor 3, the gain would be reduced by 3 dB as compared to the invention in which the reuse factor 1 would be used in a first frame and the reuse factor 2 would be used in a second frame, alternatingly.

Moreover, the invention proposes to assign the distribution of resources independently for the uplink and for the downlink, wherein different reuse schemes may be employed in the different cases.

The selection of the reuse scheme and/or of the temporal pattern to be employed may be performed based on a desired throughput of at least one cell and/or based on measured values for inter-channel interference. Alternatively, the selection of the reuse scheme and the selection of the predetermined schedule or pattern may be performed based on global parameters, e.g. based on the time of the day or the day of the week.

A further aspect of the invention relates to a radio resource controlling device for distributing radio resources of a cellular radio communication system to multiple cells of the radio communication system. The radio resources include time resources and/or frequency resources in data frames. The radio resource controlling device is configured for selecting a reuse scheme out of a plurality of reuse schemes and for assigning the distribution of resources in a data frame based on the selected reuse scheme.

According to an important aspect of the invention, the radio resource controlling device is configured to configured to perform the selection of the reuse scheme according to a predetermined schedule according to which the selected reuse scheme is kept the same throughout at least one entire data frame and another reuse scheme is selected for at least one subsequent frame.

Moreover, it is proposed that the radio resource controlling device is configured for transmitting data indicating the selected reuse scheme to the cells of the cellular radio communication system.

A further aspect of the invention relates to a user equipment device being configured to transmit communication data in data frames by selecting and using resources assigned to the user equipment device. The resources are assigned according to a reuse scheme out of a plurality of possible reuse schemes.

It is proposed that the user equipment device is configured to select the resources of the data frame according to a predetermined schedule according to which the selected reuse scheme is kept the same throughout at least one entire data frame and another reuse scheme is selected for at least one subsequent frame.

Further characterizing features and the advantages thereof will become apparent from the following description of an embodiment of the invention. The description and the figures relate to a particular embodiment of the invention and do not limit the scope of the enclosed claims in any way. The skilled person will consider sub-combinations of the combination of features constituting the below embodiment of the invention in order to find further favourable embodiments of the invention being adapted to specific application scenarios.

### 4. Brief Description of the Drawings

Fig. 1 is a schematical representation of multiple cells in a cellular radio communication system employing a first reuse scheme with reuse factor 1.
Fig. 2 is a schematical representation of multiple cells in a cellular radio communication system employing a second reuse scheme with reuse factor 3.
Fig. 3 is a schematical representation of a sequence of data frames, wherein the reuse scheme is switched according to a first temporal pattern.
Fig. 4 is a schematical representation of a sequence of data frames in which a reuse scheme is switched according to a second temporal pattern.
Fig. 5 is a schematical representation of a sequence of data frames in which a reuse scheme is switched according to a third temporal pattern.
Fig. 6 is a schematical representation of a sequence of data frames in which the reuse scheme is switched according to a fourth temporal pattern.
Fig. 7 is schematical representation of a sequence of data frames in which a reuse scheme is switched according to a fifth temporal pattern.

### 5. Detailed Description of the Embodiments

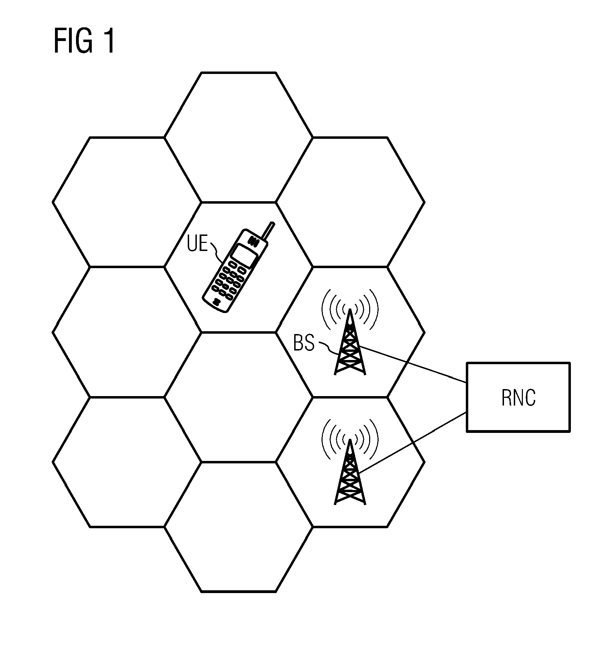

Fig. 1 is a schematical representation of multiple cells in a cellular radio communication system. The cells are represented as hexagons and are generated by different base stations or different antennae of one base station, respectively (not shown).

User equipment devices UE located within the cells transmit uplink data frames to the respective base station and receive downlink data frames from the base station. This exchange of data employs particular radio resources assigned to the respective base station and/or to the respective user equipment device.

The data frames are organized in multiple time slots, wherein in each time slot, one or more symbols may be transmitted using one or more sub-carrier frequencies. Here and in the following, particular combination of time slots and sub-carrier frequencies will be referred to as radio resources.

The distribution of the radio resources over the different cells is determined by so-called reuse schemes. If interferences at the cell boundaries shall be avoided, it is desirable not to assign the same radio resource to neighbouring cells. However, this may sometimes not be possible, such that eventually, the same radio resources are reused in every cell. If this is the case, the reuse scheme is said to have the reuse factor 1 as illustrated in Fig. 1.

On the other hand, if enough radio resources are available, it is possible to assign only one third of the total number of available radio resources to each cell, such that the same radio resource is never reused by neighbouring cells.

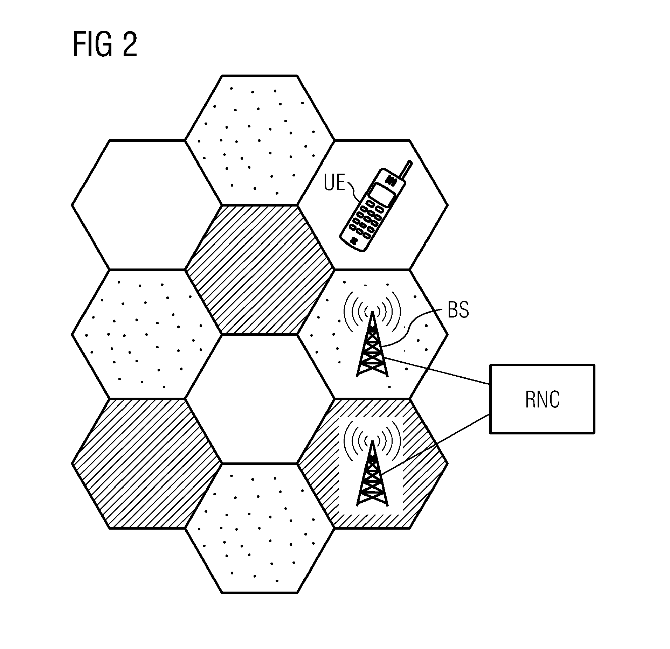

Fig. 2 illustrates such a reuse scheme which is usually referred to as a reuse scheme with reuse factor 3, because the total number of available resources is divided into three non-overlapping groups of the same size, while at the same time, the cells are divided into three classes of cells, wherein each class may not contain two immediately neighbouring cells. In Fig. 2, the different classes of cells are illustrated with different hatchings.

Of course, it is possible to construct a large number of possible reuse schemes differing in whether the different groups of resources are divided based on the time slots or based on the sub-carrier frequencies. The first case is usually referred to as "time reuse partitioning", whereas the latter case is usually referred to as "frequency reuse partitioning". Moreover, it is possible to define partially overlapping groups of resources. This may be referred to as "fractional positioning".

The assignment of radio resources is executed in a radio network controller RNC as a radio resource controlling device implementing the method according to the invention. The radio network controller selects the reuse scheme for a given data frame out of a plurality of possible reuse schemes. This selection is based on a desired cell throughput and/or based on a quantity describing the risk of interferences between neighbouring cells.

Once the reuse scheme is selected, the resources in the data frame under consideration are assigned to the cells according to the selected reuse scheme.

Moreover, the method implemented in the radio network controller RNC comprises the step of selecting a temporal pattern to be used for selecting the reuse scheme for the subsequent frames.

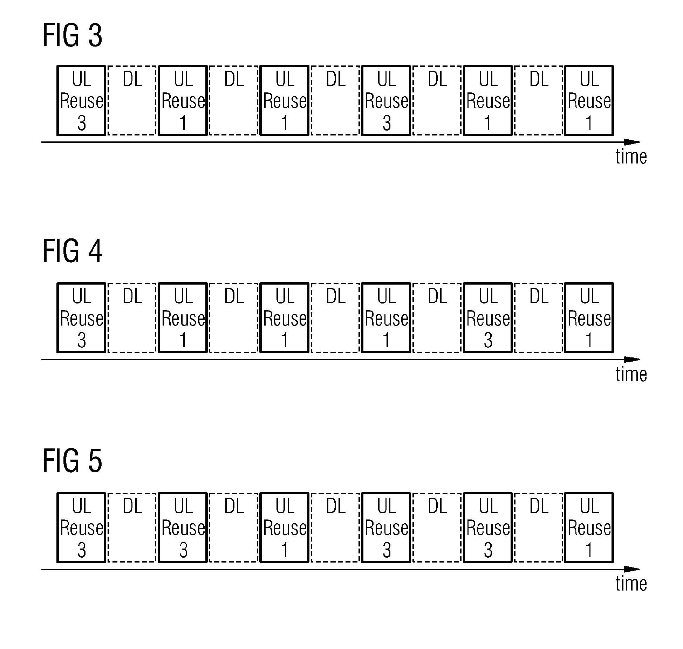

Figs. 3 to 7 illustrate different temporal patterns to be used for selecting the reuse scheme for the subsequent frames. Here and in the following, the expression "subsequent frames" refers to subsequent frames in the same direction. If e.g. uplink frames and downlink frames are interleaved, only the uplink frames or only the downlink frames are considered.

The selection of the reuse scheme may be for example based on the frame number of the frame. In the temporal pattern illustrated in Fig. 3, one uplink data frame employing the reuse scheme with reuse factor 3 illustrated in Fig. 2 is followed by two uplink data frames employing a reuse scheme with reuse factor 1. The temporal reuse pattern repeats after three frames. The reuse scheme employed may be determined by dividing the frame number modulo 3 by assigning the reuse scheme according to the result. In the embodiment of Fig. 3, if the result is 1, reuse factor 3 is used. Else, reuse factor 1 is used. The example illustrated in Fig. 3 may be used by an operator who would want to use the reuse scheme with reuse factor 1 by default, but who wants to improve the throughputs of the users located at the cell edges by interleaving a data frame with the reuse factor 3 from time to time.

A similar temporal pattern is illustrated in Fig. 4, temporal reuse scheme pattern repeats after four frames. One frame employing the reuse factor 3 is followed by two frames employing the reuse factor 1. The reuse schemes with the reuse factors 1 and 3 may of course be replaced with fractional frequency reuse schemes. The reuse scheme with the use factor 1 employed in Figs. 3 and 4 is a soft fractional frequency reuse scheme in which the same resources are employed by neighbouring cells, but the signals employing the commonly used resources are transmitted with a lower power.

Fig. 5 shows a further possible pattern in which the employed reuse scheme repeats after three frames. Two frames employing the reuse scheme with reuse factor 3 are followed by one frame employing the reuse scheme with reuse factor 1. This approach would be chosen by an operator who would like to use the reuse scheme with reuse factor 3 by default, but who wants to improve the cell throughput by interleaving frames employing the reuse factor 1 every third frame.

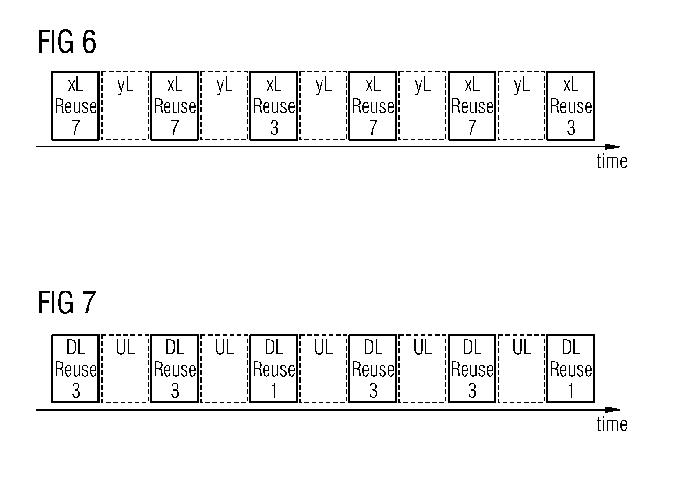

As illustrated in Fig. 6, the same pattern of reuse schemes or a different pattern of reuse schemes may be employed in the assignment of resources to the downlink data frames. The temporal pattern employed in Fig. 6 corresponds to the temporal pattern employed in Fig. 5 for the uplink transmission.

Fig. 7 shows a further possible temporal pattern in which the frame level reuse partitioning is done by alternating reuse schemes with reuse factor 3 and reuse schemes with reuse factor 7, wherein two frames employing the latter type of reuse schemes are followed by one frame employing the reuse scheme with reuse factor 3. In Fig. 7, xL may stand for UL or DL (uplink or downlink), when yL stands for the other one of these two possibilities.

The user equipment device UE may account for the temporal pattern by employing the same temporal pattern in the decoding procedure. The information relating to which pattern is to be employed can be transmitted once, such that the reuse scheme to be employed may be determined based on the frame number during the following transmission.

It is emphasized that the invention is not limited to the above described embodiments where periodical patterns are used for the selection of the reuse schemes.

A first group of embodiments of the invention provide that the reuse scheme changes from frame to frame in a predetermined way. No real-time triggers from system conditions are used upon selecting the reuse scheme or upon determining the schedule or pattern for this selection. Setup configuration may comprise a one-time manual operation for choosing the schedule.

A second group of embodiments use multiple predetermined reuse patterns which are changed automatically network-wide based on predetermined schedule, e.g. depending on the time of day & day of week. No real-time triggers from system conditions need to be employed.

A third group of embodiments is similar to the second group of embodiments but the schedule is replaced by a real-time trigger algorithm using e.g. traffic load situation and/or other parameters as external real-time triggering events determining the selection of the reuse scheme.

All the above embodiments may have centralized control with network-wide impacts. Alternatively, it is proposed to provide centralized control of the reuse partitioning with local impacts. One of a plurality of predetermined resource sets may be chosen locally and or a resource optimization algorithm may be executed locally and the allowed resources may be indicated to each cell separately. This would result in a more flexible scheme than the use of a set of predetermined conditions.

Moreover, it is proposed to perform a distributed control of the employed reuse schemes. Each cell might have a set of predetermined resource sets to choose from and/or each cell might re-optimize it's own resources.

## Claims

1. A method for assigning radio resources to multiple cells in a cellular radio communication system, said radio resources including time resources and/or frequency resources in data frames, said method including the steps of:
a. selecting a reuse scheme for a given data frame out of a plurality of reuse schemes determining the reuse of resources in different cells, and
b. assigning the distribution of resources in a data frame based on the selected reuse scheme,
**characterized in that**
c. the step of selecting the reuse scheme is performed such that the selected reuse scheme is kept the same throughout at least one entire data frame and another reuse scheme is selected for at least one subsequent frame.

2. A method according to claim 1, **characterized in that** the selection of the reuse scheme is executed according to a predetermined schedule.

3. A method according to claim 1 or 2, **characterized in that** the method further comprises the step of selecting a temporal pattern to be used for selecting the reuse scheme for the subsequent frames.

4. A method according to one of the preceding claims, **characterized in that** said plurality of reuse schemes include at least a reuse scheme with reuse factor 1 and a reuse scheme with reuse factor 3.

5. A method according to one of the preceding claims, **characterized in that** said plurality of reuse schemes includes at least one fractional reuse scheme.

6. A method according to one of the preceding claims, **characterized in that** said plurality of reuse schemes includes at least one soft frequency reuse scheme.

7. A method according to at least one of the preceding claims, **characterized in that** the reuse scheme is selected dynamically based on a real-time trigger.

8. A method according to at least one of the preceding claims, **characterized in that** the step of assigning the distribution of resources includes assigning the uplink resources according to an uplink reuse scheme and assigning the downlink resources according to a downlink reuse scheme independent of the assignment of uplink resources.

9. A method according to at least one of the preceding claims, **characterized in that** said selection of the reuse scheme is based on a desired throughput of at least one cell.

10. A method according to at least one of the preceding claims, **characterized in that** said predetermined schedule is adapted based on a time of day and/or day of the week.

11. A radio resource controlling device for distributing radio resources of a cellular radio communication system to multiple cells of the radio communication system, said radio resources including time resources and/or frequency resources in data frames, said radio resource controlling device being configured for:
a. selecting a reuse scheme out of a plurality of reuse schemes determining the reuse of resources in different cells, and
b. assigning the distribution of resources in a data frame over the cells based on the selected reuse scheme,
**characterized in that** said radio resource controlling device is further configured to perform the selection of the reuse scheme according to a predetermined schedule according to which the selected reuse scheme is kept the same throughout at least one entire data frame and another reuse scheme is selected for at least one subsequent frame.

12. Radio resource controlling device according to claim 11, **characterized by** being further configured for transmitting data indicating the selected reuse scheme to the cells of the cellular radio communication system.

13. Radio resource controlling device according to claim 12 or 10, further comprising a user interface comprising means for manually selecting said predetermined schedule.

14. Radio resource controlling device according to one of claims 11 to 13, **characterized by** being integrated in a Radio Network Controller (RNC).

15. A user equipment device being configured to transmit communication data in data frames by selecting and using resources assigned to the user equipment device, the resources being assigned according to reuse scheme out of a plurality of reuse schemes determining the reuse of resources in different cells **characterized in that** said user equipment device is configured to select the resources of the data frame according to a predetermined schedule according to which the selected reuse scheme is kept the same throughout at least one entire data frame and another reuse scheme is selected for at least one subsequent frame.
